# EUROPÄISCHE PATENTSCHRIFT

(11) **EP 2 066 467 B1**
(45) Veröffentlichungstag und Bekanntmachung des Hinweises auf die Patenterteilung: **24.03.2010**
(21) Anmeldenummer: 07801668.0
(22) Anmeldetag: 16.08.2007
(51) Int. Cl.: B22D 11/08, B22D 11/20

(54) **VERFAHREN ZUM STRANGGIESSEN EINES METALLSTRANGES**
METHOD FOR THE CONTINUOUS CASTING OF A METAL STRAND
PROCÉDÉ D'EXTRUSION D'UNE BARRE MÉTALLIQUE

(30) Priorität: 19.09.2006 DE 102006043797
(43) Veröffentlichungstag der Anmeldung: 10.06.2009
(73) Patentinhaber: SMS Siemag AG, 40237 Düsseldorf (DE)
(72) Erfinder: GIRGENSOHN, Albrecht, 40597 Düsseldorf (DE); SCHAPS, Lothar, 52525 Heinsberg (DE); PLOCIENNIK, Uwe, 40882 Ratingen (DE)
(74) Vertreter: Klüppel, Walter
(86) Internationale Anmeldenummer: PCT/EP2007/007204
(87) Internationale Veröffentlichungsnummer: WO 2008/034500

(56) Entgegenhaltungen:
- EP-A- 0 014 862
- EP-A- 1 486 275
- EP-A- 1 543 900
- JP-A- 10 185 505
- JP-A- 55 068 162
- JP-A- 57 088 958
- JP-A- 62 207 550
- KR-A- 20050 065 730
- US-A- 3 983 631

## Beschreibung

Die Erfindung betrifft ein Verfahren zum Stranggießen eines Metallstranges, bei dem der gegossene Strang eine Kokille vertikal oder im Bogen nach unten verlässt und anschließend in einer Strangführung geführt wird, wobei die Strangführung eine Anzahl Rollenpaare aufweist, die zwischen sich einen einstellbaren Rollenspalt definieren, wobei zum Gießstart zum Verschluss der Kokille nach unten ein Strangstück in die Kokille eingesetzt wird, an das sich der gegossene Strang anschließt, und wobei zum Kalibrieren und/oder zum Messen des Rollenspalts zwischen den jeweiligen Rollenpaaren das mit einer definierten bzw. kalibrierten Dicke hergestellte Strangstück eingesetzt wird.

Erhöhte Anforderungen an die Innenqualität von stranggegossenen Vorprodukten, wie beispielsweise Brammen, Vorblöcke oder Knüppel, haben dazu geführt, dass Stranggießanlagen mit Elementen zur Reduzierung der Strangdicke ausgerüstet werden (beispielsweise mit entsprechenden Rollen), die bevorzugt im Bereich der Enderstarrung wirken (sog. Soft-Reduktion). Hierbei werden beispielsweise die hinteren Segmente von Brammen-Stranggießanlagen mit positions- und/oder kraftgeregelten hydraulischen Anstellzylindern ausgestattet. Bei Knüppel- oder Vorblockanlagen werden dagegen die Treiber, die sich hinter den Segmenten befinden, zur Reduzierung der Strangdicke verwendet.

Dabei hat es sich gezeigt, dass hohe Anforderungen an die Genauigkeit der einzelnen Reduktionsschritte gestellt werden müssen, um reproduzierbar gute Qualitätsergebnisse erzielen zu können. Das gilt insbesondere dann, wenn die jeweiligen Umformelemente positionsgeregelt angestellt werden. Hierbei muss eine Genauigkeit für die Position der einzelnen Rollen von etwa 1/10 mm eingehalten werden.

Während es technisch problemlos möglich ist, die Hydraulikzylinder zur Betätigung der Rollen mit einer entsprechenden Genauigkeit zu positionieren, gibt es bei anderen Bauteilen, die zur Übertragung der Umformkräfte benötigt werden, verschiedene Fehlermöglichkeiten.

Diesbezüglich besonders problematisch ist der Durchmesser der Strangführungs- bzw. Treiberrollen,die zur Umformung des Stranges eingesetzt werden. Die Rollen sind kontinuierlich in Kontakt mit der heißen Strangoberfläche, weshalb sie einem relativ hohen Verschleiß unterliegen, der je nach den Umgebungsbedingungen (Temperatur, Anstellkraft,Antriebsdrehmoment) von Rolle zu Rolle unterschiedlich sein kann. Im Extremfall kann der Rollenverschleiß einige Millimeter im Durchmesser betragen. Ferner variiert er über die Ballenlänge. Über einen längeren Zeitraum betrachtet verändert sich damit unter sonst gleichen Bedingungen auch die tatsächlich auf den Metallstrang übertragene Umformung, so dass die erzielten Qualitätsergebnisse nicht reproduzierbar sind.

Um die Schwierigkeiten zu beheben, ist es bekannt, die Strangführungs- bzw. die Treiberrollen in gewissen zeitlichen Abständen neu zu kalibrieren. Dazu wird üblicherweise entweder in der Anlage oder auf einem externen Prüfstand ein Teststück (Testbramme) mit bekannten Abmessungen in die Segmente eingefahren und genau positioniert. Anschließend wird das Segment bzw. der Treiber geschlossen, so dass die Rollen auf dem Teststück aufliegen. Dabei wird von den Hydraulikzylindern eine definierte Kraft aufgebracht. Über einen Offset-Wert kann die gemessene Zylinderposition (und damit auch die Rollenposition) mit der bekannten Dicke des Teststücks in Übereinstimmung gebracht werden. Die dabei zum Einsatz kommenden Teststücke können je nach den geometrischen Verhältnissen entweder als separates Teil ausgeführt sein oder für die Kalibrierung an den Kaltstrang montiert werden.

Die KR 2005 0065730 A offenbart ein Verfahren der eingangs genannten Art, bei dem ein Anfahrstück eingesetzt wird, das eine definierte Dicke in einem Kalibrierbereich aufweist.

Aus der EP 1 543 900 A1 ist ein Verfahren zum Grundeinstellen und Kontrollieren der Rollenspalte von Stützrollensegmenten oder Treiberrollenpaaren in einer Stranggießmaschine zum Gießen von flüssigen Metallen bekannt, bei dem der Rollenspalt zwischen zwei sich gegenüberliegenden Stützrollen der Festseite und der Losseite über paarweise hydraulische Kolben-Zylinder-Einheiten mit integrierten elektronischen Weg- oder Positionsgebern gemessen und geregelt wird. Dabei werden die Messwerte innerhalb eines Regelkreises der Steuerung für die auf den Gießstrang in Zeitabschnitten zu übertragenden Kräfte ausgewertet. Zum genauen Kalibrieren des Rollenspalts ist vorgesehen, dass ein zumindest ein Rollenpaar erfassendes Kaliberstück durch den offenen Rollenspalt bewegt und während der Transportbewegung zwischen jeweils zwei sich gegenüberliegenden Stützrollen für eine kurze Zeit geklemmt und die jeweils den Klemmstellungen zugehörigen Positionen der Kolben-Zylinder-Einheiten messtechnisch gespeichert und nach einem Sollwert-Istwert-Vergleich die Positionen der Kolben-Zylinder-Einheiten vor Gießstart oder in einer Gießpause korrigiert werden.

Eine ähnliche Lösung beschreibt die EP 1 486 275 A1, bei der vorgesehen ist, dass ein Segment-Unterrahmen der Festseite und ein Segment-Oberrahmen der Losseite, die jeweils die Rollen tragen, mit einer definierten Kraft der hydraulischen Kolben-Zylinder-Einheiten mit paarweise vorgesehenen Distanzstücken mit vorberechneter Dicke außerhalb der Rollenspalte zwischen Segment-Oberrahmen und Segment-Unterrahmen aufeinander gedrückt werden und die zugeordneten Messwerte der Weg- oder Positionsgeber gesichert werden.

Ähnliche Lösungen, bei denen eine als Kaliberstück eingesetzte Testbramme verwendet wird, sind beispielsweise aus der EP 0 047 919 A1, aus der DE 699 06 118 T2, aus der JP 0926 7159 A, aus der JP 2003 112 240 A, aus der KR 10200 1004 8624 A, aus der JP 5700 1554 A, aus der JP 0630-7937 A und aus der JP 0308 6360 A bekannt.

Nachteilig ist bei allen vorbeschriebenen Lösungen, dass das Verfahren zum Kalibrieren bzw. zum Messen des Spaltes zwischen den Rollen relativ zeitaufwändig ist, so dass es aus ökonomischen Gründen nur relativ selten durchgeführt wird. Dabei besteht das Problem, dass in der Zwischenzeit zwischen zwei Kalibrierungen bzw. Messungen die Rollen eines Rollenpaares weiter verschleißen, so dass die tatsächliche Dickenreduktion des Strangs von den eingestellten Werten abweicht.

Der Erfindung liegt daher die Aufgabe zugrunde, ein Verfahren der eingangs genannten Art so weiterzubilden, dass mit geringem Aufwand die Möglichkeit geschaffen wird, die verschleißbedingte Abweichung der Rollengeometrie schnell auszugleichen, wodurch das Gießen eines Metallstranges mit hoher Qualität ermöglicht wird. Gemäß der Erfindung wird also angestrebt, mit geringem Zusatzaufwand verschleißbedingte Abweichungen der Rollen auszugleichen und die Qualität des Gießproduktes zu optimieren.

Diese Aufgabe wird erfindungsgemäß dadurch gelöst, dass das Strangstück nach der Durcherstarrung des flüssigen Metalls abgetrennt wird und das Strangstück für eine Vielzahl von Gießstarts verwendet wird, wobei das Strangstück an den den Rollen der Rollenpaare zugewandten Seiten gehärtet wird und/oder mit einer verschleißfesten Beschichtung versehen wird.

Dabei kann vorgesehen werden, dass nur ein in Förderrichtung des Metallstranges bestimmter Abschnitt des Strangstücks zur Kalibrierung bzw. Messung benutzt wird.

Das zur Kalibrierung bzw. Messung genutzte Strangstück wird also nach der Solidifikation des Metalls, also nach dem Erstarren der Schmelze, wieder abgetrennt. Hieraus ergibt sich die Möglichkeit einer mehrmaligen Verwendung desselben Strangstücks, d. h. hiernach wird das Strangstück für eine Vielzahl von Gießstarts verwendet.

Damit das Strangstück besonders gut für eine präzise Kalibrierung auch in einer Vielzahl von Anwendungsfällen tauglich ist, sieht die Erfindung vor, dass das Strangstück an den den Rollen der Rollenpaare zugewandten Seiten gehärtet ist.

Dieses Ziel kann auch dadurch verbessert erreicht werden, dass das Strangstück an den den Rollen der Rollenpaare zugewandten Seiten mit einer Beschichtung versehen ist. Die Beschichtung ist dabei verschleißfest ausgebildet, wofür an sich bekannte harte, jedoch temperaturstabile Beschichtungsmaterialien eingesetzt werden können.

Bei jedem Gießstart oder entsprechend den Anforderungen kann der Rollenspalt zwischen den Rollenpaaren gemessen und gespeichert werden. Dabei kann weiterbildungsgemäß vorgesehen werden, dass eine Verstellung des Rollenspalts zwischen den jeweiligen Rollenpaaren erst dann vorgenommen wird, wenn die Abweichung des Rollenspalts zu einem früher gemessenen Wert einen vorgegebenen Wert übersteigt.

Beim Kalibrieren bzw. Messen werden die Rollen der Rollenpaare vorzugsweise mit einer definierten Kraft auf die Oberfläche des Strangstücks gepresst.

Mit dem vorgeschlagenen Verfahren kann der aktuelle Rollendurchmesser und damit auch der Rollenspalt hinreichend oft vermessen werden, so dass verschleißbedingte Abweichungen bald erkannt und ausgeglichen werden können. Der hierfür zu treibende Aufwand ist gering und erlaubt eine häufige Wiederholung der Kalibrierung bzw. der Messung samt Anpassung der geometrischen Parameter in Abhängigkeit des aufgetretenen Verschleißes an den Rollen.

Erfindungsgemäß wird hierzu der Kaltstrang genutzt, der beim Gießstart die Kokille nach unten verschließt, sich mit dem Warmstrang verbindet, beim Gießstart durch die Anlage transportiert und am Ende der Strangführung wieder vom Warmstrang getrennt wird. Anstelle eines separaten Teils bzw. eines Kaliberstücks - wie im Stand der Technik vorgeschlagen -, das für die Kalibrierung an den Kaltstrang montiert wird, kann also ein bestimmter Abschnitt des Kaltstrangs bei jedem Durchlauf des Kaltstrangs durch die Strangführung für die Ermittlung der aktuellen Offset-Werte verwendet werden, und zwar für die Rollen, die auf dem Kaltstrang aufliegen. Diese Rollen werden bevorzugt mit einer definierten Kraft gegen den Kaltstrang angestellt, was ohnehin für den Strangtransport notwendig ist. Die Zylinderposition der Einstellzylinder der Rollen gegen den Strang kann ausreichend genau gemessen werden.

Wie weiterbildungsgemäß vorgeschlagen wurde, kann der entsprechende Abschnitt des Kaltstrangs z. B. durch Härten bzw. durch Beschichten der Oberfläche vor Verformung, Korrosion und Abrieb geschützt werden, damit sich seine Geometrie über die Zeit nicht verändert - auch nicht bei mehrmaligem Einsatz des Strangstücks.

Wie ebenfalls weiterbildungsgemäß vorgeschlagen wurde, werden die bei jedem Durchlauf des Kaltstrangs vorzugsweise für alle sich im Eingriff befindliche Rollen ermittelten Offset-Werte gespeichert, wodurch es möglich wird, den Rollenverschleiß kontinuierlich zu überwachen. Eine Veränderung der Offset-Werte ist erst dann notwendig, wenn bestimmte Grenzwerte, z. B. 0,1 Millimeter, überschritten werden. Natürlich ist es aber auch möglich, dass die ermittelten Offset-Werte bei jedem Durchlauf des Kaltstrangs automatisch verwertet, d. h. die Rollen entsprechend nachgestellt werden.

In der Zeichnung ist ein Ausführungsbeispiel der Erfindung dargestellt.
Es zeigen:

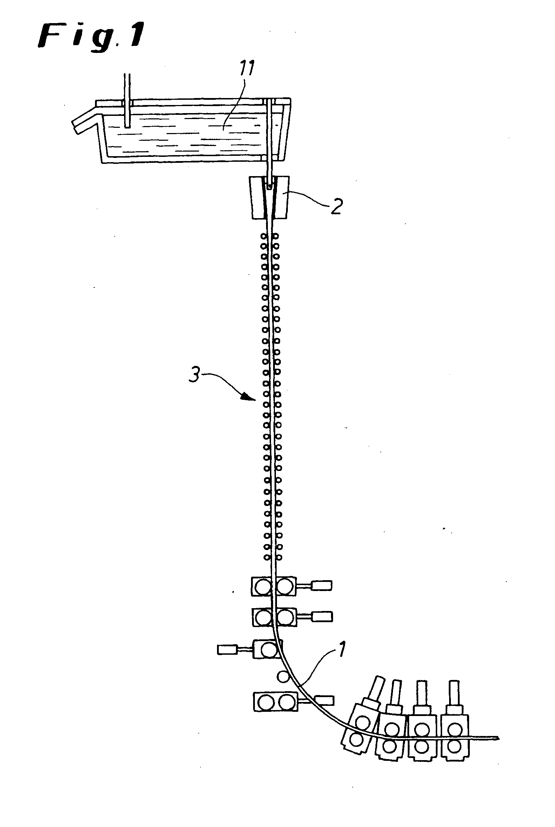

- Fig. 1: die Seitenansicht einer Dünnbrammen-Stranggießmaschine und
- Fig. 2: die Seitenansicht eines Stützrollensegments bei durchlaufendem Strangstück.

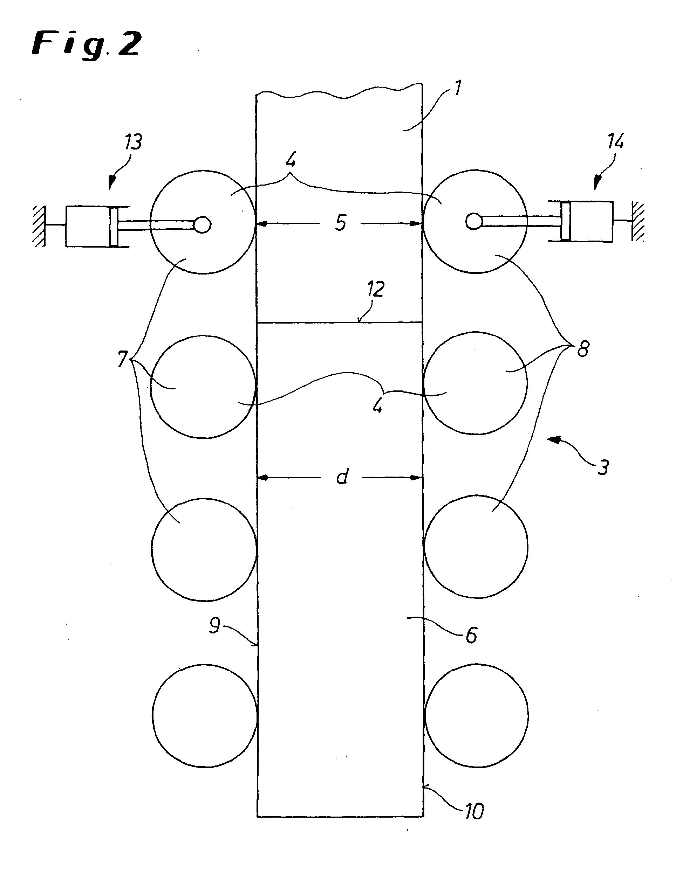

In den Figuren ist eine Stranggießanlage zu sehen, mit der ein Metallstrang 1 stranggegossen wird. Aus einem Vorratsbehälter 11 für flüssigen Stahl gelangt dieser zu einer Kokille 2. Vor dem Gießstart wird die Kokille 2 von unten mit einem Strangstück 6 verschlossen, das in Fig. 2 zu sehen ist und das an den Seiten, die später von Strangführungsrollen kontaktiert werden, präzise auf ein Maß, beispielsweise auf das Sollmaß des Strangs 1, bearbeitet ist. Die Seiten 9 bzw. 10 des Strangstücks 6 (s. Fig. 2) können dabei gehärtet und zusätzlich mit einer Beschichtung versehen sein, die das Strangstück 6 resistent gegen Verschleiß macht.

Beispiele für mögliche Beschichtung sind folgende: Es kann eine Schicht aus an sich bekannten Hartstoffen wie WC, Co, Cr₃C₂, oder aus Nickel oder einer Nickelverbindung wie NiCr, NiAl, CuNiln oder auch aus Diamant (C) oder Keramikmaterial (z. B. Al₂O₃, 3TiO₂) zumindest auf die Seiten 9,10 aufgebracht werden. Dies kann beispielsweise durch Flammspritzen oder Plasmaspritzen erfolgen, oder auch elektrolytisch.

Wie es aus Fig. 2 hervorgeht, schließt sich an einer Übergangsstelle 12 an das Strangstück 6 das stranggegossene Material 1 an.

Beim Fördern des Strangstücks 6 sowie des sich an diesen anschließenden gegossenen Metallstrang 1 durch die Stranggießanlage wird das Strangstück 6 und der Metallstrang 1 im Bereich einer Strangführung 3 durch eine Anzahl Rollenpaare 4 an den Seiten 9 und 10 kontaktiert und hierdurch geführt sowie allmählich in die Horizontale umgebogen. Die Rollenpaare 4 weisen jeweils Rollen 7 bzw. 8 auf, zwischen denen ein Rollenspalt 5 definiert wird. Die Rollen 7, 8 eines Rollenpaars 4 werden mit nicht nur schematisch dargestellten hydraulischen Kolben-Zylinder-Systemen 13, 14 normal zur kontaktierten Oberfläche des Metallstrangs 1 so eingestellt, dass sich der gewünschte Rollenspalt 5 mit definierter Dicke ergibt, wobei hierunter natürlich zu verstehen ist, dass es um die jeweilige, sich über den Verlauf der Strangführung 3 verändernde Soll-Dicke des Strangs 1 an dieser Stelle geht.

Nachdem das Strangstück 6 zum Start des Gießvorgangs die gesamte Strangführung 3 durchläuft und eine präzise gefertigte Dicke d aufweist, wird gemäß der Erfindung das Strangstück 6 genutzt, um die einzelnen Rollenpaare 4 der Anlage zu kalibrieren, d. h. die Größe des Rollenspalts 5 eines Rollenpaars 4 so einzustellen, dass ein an dieser Stelle der Strangführung 3 gewünschter Sollwert vorliegt.

In vorteilhafter Weise sind hierfür keine Kalibrierelemente erforderlich, die - unabhängig vom eigentlichen Gießvorgang - durch die Stranggießanlage geführt werden, um die Kalibrierung der Rollenpaare vorzunehmen.

### Bezugszeichenliste:

- 1: Metallstrang
- 2: Kokille
- 3: Strangführung
- 4: Rollenpaar
- 5: Rollenspalt
- 6: Strangstück
- 7: Rolle
- 8: Rolle
- 9: Seite des Strangstücks
- 10: Seite des Strangstücks
- 11: Vorratsbehälter
- 12: Übergangsstelle
- 13: Kolben-Zylinder-System
- 14: Kolben-Zylinder-System

- d: Dicke des Strangstücks

## Patentansprüche

1. Verfahren zum Stranggießen eines Metallstranges (1), bei dem der gegossene Strang (1) eine Kokille (2) vertikal oder im Bogen nach unten verlässt und anschließend in einer Strangführung (3) geführt wird, wobei die Strangführung (3) eine Anzahl Rollenpaare (4) aufweist, die zwischen sich einen einstellbaren Rollenspalt (5) definieren, wobei zum Gießstart zum Verschluss der Kokille (2) nach unten ein Strangstück (6) in die Kokille (2) eingesetzt wird, an das sich der gegossene Strang (1) anschließt, und wobei zum Kalibrieren und/oder zum Messen des Rollenspalts (5) zwischen den jeweiligen Rollenpaaren das mit einer definierten bzw. kalibrierten Dicke (d) hergestellte Strangstück (6) eingesetzt wird,
**dadurch gekennzeichnet,**
**dass** das Strangstück (6) nach der Durcherstarrung des flüssigen Metalls abgetrennt wird und das Strangstück (6) für eine Vielzahl von Gießstarts verwendet wird, wobei das Strangstück (6) an den den Rollen (7, 8) der Rollenpaare (4) zugewandten Seiten (9, 10) gehärtet wird und/oder mit einer verschleißfesten Beschichtung versehen wird.

2. Verfahren nach Anspruch 1,
**dadurch gekennzeichnet,**
**dass** nur ein in Förderrichtung des Metallstranges (1) bestimmter Abschnitt des Strangstücks (6) zur Kalibrierung bzw. Messung benutzt wird.

3. Verfahren nach Anspruch 1 oder 2,
**dadurch gekennzeichnet,**
**dass** bei jedem Gießstart der Rollenspalt (5) zwischen den Rollenpaaren (4) gemessen und gespeichert wird.

4. Verfahren nach Anspruch 3,
**dadurch gekennzeichnet,**
**dass** eine Verstellung des Rollenspalts (5) zwischen dem Rollenpaar (4) erst dann vorgenommen wird, wenn die Abweichung des Rollenspalts (5) zu einem früher gemessenen Wert einen vorgegebenen Wert übersteigt.

5. Verfahren nach einem der Ansprüche 1 bis 4,
**dadurch gekennzeichnet,**
**dass** beim Kalibrieren bzw. Messen die Rollen (7, 8) der Rollenpaare (4) mit einer definierten Kraft auf die Oberfläche des Strangstücks (6) gepresst werden.

## Claims

1. Method of continuously casting a metal strand (1) in which the cast strand (1) leaves a mould (2) vertically or in a curve in downward direction and is subsequently guided in a strand guide (3), wherein the strand guide (3) comprises a plurality of roll pairs (4) which each define an adjustable roll gap (5), wherein at the start of casting, in order to downwardly close the mould (2), a dummy bar (6) is inserted into the mould (2) and is followed by the cast strand (1), and wherein the dummy bar (6) produced with a defined or calibrated thickness (d) is used for calibrating and/or measuring the roll gap (5) between the respective roll pairs, **characterised in that** after hardening through of the liquid metal the dummy bar (6) is separated and reused for a plurality of casting starts, wherein the dummy bar (6) is hardened and/or provided with a wear-resistant coating at the sides (9, 10) facing the rolls (7, 8) of the roll pairs (4).

2. Method according to claim 1, **characterised in that** only a section, which is specific to the travel direction of the metal strand (1), of the dummy bar (6) is used for the calibration or measuring.

3. Method according to claim 1 or 2, **characterised in that** the roll gap (5) between the roll pairs (4) is measured and stored at each casting start.

4. Method according to claim 3, **characterised in that** an adjustment of the roll gap (5) between the roll pair (4) is undertaken only if the difference of the roll gap (5) from a previously measured value exceeds a predetermined value.

5. Method according to any one of claims 1 to 4, **characterised in that** during the calibrating or measuring the rolls (7, 8) of the roll pair (4) are pressed by a defined force onto the surface of the dummy bar (6).

## Revendications

1. Procédé pour la coulée continue d'un brin métallique (1), dans lequel le brin (1) coulé quitte une lingotière (2) verticalement ou en arc vers le bas puis est guidé dans un guidage (3) de brin, où le guidage (3) de brin présente un certain nombre de paires (4) de rouleaux qui définissent entre elles une fente (5) de rouleau réglable, où, pour démarrer la coulée, pour fermer la lingotière (2) vers le bas, une pièce coulée (6) est placée dans la lingotière (2), à laquelle se raccorde le brin coulé (1) et où on utilise pour le calibrage et/ou la mesure de la fente (5) de rouleau entre les différentes paires de rouleaux la pièce coulée (6) réalisée avec une épaisseur (d) définie ou calibrée, **caractérisé**
**en ce que** la pièce coulée (6) est séparée après la solidification du métal liquide et la pièce coulée (6) est utilisée pour une multitude de démarrages de coulée, la pièce coulée (6) étant durcie sur les faces (9, 10) orientées vers les rouleaux (7, 8) de la paire (4) de rouleaux et/ou étant pourvue d'un revêtement résistant à l'usure.

2. Procédé selon la revendication 1, **caractérisé**
**en qu'**on n'utilise une section déterminée de la pièce coulée (6) que dans le sens du transport du brin métallique (1) pour le calibrage ou la mesure.

3. Procédé selon la revendication 1 ou 2, **caractérisé**
**en ce que** la fente (5) de rouleau entre les paires (4) de rouleaux est mesurée et enregistrée à chaque démarrage de coulée.

4. Procédé selon la revendication 3, **caractérisé**
**en ce qu'**on ne réalise un réglage de la fente (5) de rouleau entre la paire (4) de rouleaux que lorsque la déviation de la fente (5) de rouleau dépasse d'une valeur prédéfinie une valeur mesurée précédemment.

5. Procédé selon l'une quelconque des revendications 1 à 4, **caractérisé en ce que** lors du calibrage ou de la mesure, les rouleaux (7, 8) de la paire (4) de rouleaux sont comprimés à une force définie contre la surface de la pièce coulée (6).
